(19) Europäisches Patentamt
European Patent Office
Office européen des brevets

(11) **EP 3 866 010 A1**

(12) **EUROPEAN PATENT APPLICATION**

(43) Date of publication:
**18.08.2021 Bulletin 2021/33**

(51) Int Cl.:
***G06F 9/50*** (2006.01)  ***G06Q 20/40*** (2012.01)

(21) Application number: **20156949.8**

(22) Date of filing: **12.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **RAJ, Arun**
**635110 Hosur, Tamil Nadu (IN)**
• **MATHEW, Akshay**
**560100 Bangalore, Karnataka (IN)**
• **THIYAGARAJAN, Rajaram**
**560102 Bangalore, Karnataka (IN)**

(74) Representative: **Patentanwaltskanzlei WILHELM & BECK**
**Prinzenstraße 13**
**80639 München (DE)**

(54) **METHOD AND SYSTEM FOR PROCESSING TRANSACTIONS IN A BLOCK-CHAIN NETWORK**

(57)     A method (300), device (101) and a system (100) of processing a transaction is provided. In one aspect, the method (300) includes receiving, by a first node (101A) in a plurality of nodes (101A-N) of a distributed ledger system (100), a request to validate an instance of the transaction. The method (300) further includes determining whether resource parameters of the first node (101A) satisfy threshold resource parameter requirement for validating the transaction. Additionally, the method (300) includes if the resource parameters of the first node (101A) fail to satisfy the threshold resource parameter requirement, selecting at least one second node (101B) that has validated the transaction. Furthermore the method (300) includes determining a validation decision associated with the at least one second node (101B) of the plurality of nodes (101A-N) of the distributed ledger system (100). The method (300) also includes processing the instance of the transaction by the first node (101A) based on the validation decision associated with the at least one second node (101B).

FIG 1

EP 3 866 010 A1

## Description

The present invention relates to a method and system for processing transactions in a blockchain network.

Blockchain is a distributed ledger or a database of information which is governed in a decentralized manner. Therefore, information may be stored across a plurality of servers and locations that are connected through a network. Information is stored in the distributed ledgers in a secure and transparent manner such that multiple copies of the information are available across different servers. Such servers may be referred to as nodes. Blockchain maintains a record of every transaction requested and executed on the blockchain network. Every such transaction to be processed has to be validated by a plurality of nodes in the blockchain network. Such nodes may be termed as validator nodes. Several such transactions may be grouped as blocks so as to be processed. Therefore, when a request to process a block is received, the validator nodes may execute such transactions and validate the execution results. Based on the execution results, the validator nodes may designate a vote to accept or reject the block from being added to the blockchain. If majority of the validator nodes vote in favour of adding the block, the block is added to the blockchain.

The time duration for acceptance or rejection of a block may depend on the performance of the validator nodes. If one or more validator nodes is resource constrained, the validation process takes a longer time thereby affecting the overall performance of the blockchain. Decentralized ledger systems are inherently slower than centralized systems by design. Therefore, deficiency in performance of such decentralized ledger systems may affect the adoption of such systems in regular practice.

Currently, every node that takes part in the functioning of the blockchain is required to have sufficient computational resources and network capacity. This requires dedicated hardware and therefore is expensive. Additionally, validator nodes may have to lock cryptocurrency in an escrow account to be a validator node. In case of incorrect behavior of such validator node, a portion of the cryptocurrency may be deducted from the escrow account as a penalty. Therefore, validator nodes have to stock sufficient currency in order to afford competent hardware for the validation process. Thus, non-validator nodes may be unable to become validator nodes. Therefore, these exists a need for non-validator nodes in a blockchain network to participate in the validation process without affecting the performance of the blockchain network, by becoming validator nodes. This would prevent domination of the blockchain network by one or more nodes which may be computationally powerful. Additionally, there may be a need for additional validator nodes as due to unavailability of hardware resources, a validator node may not be able to validate a transaction.

Therefore, there is a need for a method and system that can effectively manage the validation process in a blockchain network when one or more validator nodes may not have sufficient computational resources for validating a transaction or a block of transactions.

The object of the invention is therefore to provide a method and a system for processing transactions in a blockchain network that maintains effectiveness of the blockchain network and also enables non-validator nodes in the blockchain network to participate in the process of validation of transactions.

The present invention describes a method of processing a transaction in a blockchain network. The method includes receiving by a first node in a plurality of nodes of the blockchain network, a request to validate an instance of the transaction. The blockchain network may include a plurality of nodes essential for functioning of the blockchain network. The nodes may be devices on the blockchain network that are capable of performing one or more assigned tasks. A node can be, for example, a computing device including a processing unit. The node may be configured to store copies of a blockchain transaction and/or to execute a transaction. A transaction may be a record of an event that may require execution. Transactions may include, for example, financial transactions, recordation of an agreement between parties, information associated with identity of a person, information associated with ownership of a property, etc. The blockchain network may include one or more types of nodes. Of the one or more types of nodes, validator nodes are responsible for validation of a plurality of transactions in the blockchain network. The validator nodes in the blockchain network may validate the transaction for the transaction to be included in the blockchain. Therefore, the accuracy of the transaction is ensured before such transaction is maintained in the blockchain network. Such an instance to validate the transaction may be received by the first node of the plurality of nodes in the blockchain network.

The method further includes determining whether resource parameters of the first node satisfy threshold resource parameter requirement for validating the transaction. In an embodiment, the resource parameters include parameters associated with one or more resources, for example, time required for validating the decision from a time of receiving the request to validate the transaction, network availability associated with the node when the request to validate the transaction is received, processing capacity associated with node when the request to validate the transaction is received, etc. The threshold resource parameter requirement may be the minimum resource parameter requirement that may be required in order to execute the transaction for validation. In an embodiment, the threshold resource requirement may be adapted according to the nature of the transaction to be validated.

The method further includes determining a validation decision associated with at least one second node of the plurality of nodes in the blockchain network, if the resource parameters of the first node fail to satisfy the threshold resource parameter requirement. The blockchain network may include at least one second node of the plurality of nodes that may have validated the transaction. On validation of such transaction, a validation decision may be generated. Such validation decision may indicate, for example, whether a block may be added to the blockchain or may be rejected. In an embodiment, the second node of the plurality of nodes may have the resources required to execute the transaction and generate the associated validation decision. Therefore, the validation decision associated with such at least one second node is determined if the first node may not have resources to execute the transaction. The method further includes processing the instance of the transaction based on the validation decision associated with the at least one second node. In an embodiment, processing the instance of the transaction may include applying the validation decision associated with the second node as the validation decision of the first node. In another embodiment, processing the instance of the transaction includes replicating a designated vote associated with the second node as the designated vote associated with the first node. The designated vote may be in reference to the transaction. Advantageously, the process of validating the transaction is faster, thereby increasing the performance of the blockchain network. Therefore, resource parameter constraints associated with the first node are eliminated. On validation of the transaction, a block associated with the transaction may be added to the blockchain network. Once a block is added to the blockchain network, alteration of the block is made impossible.

According to an embodiment, the at least one second node is selected from the plurality of nodes in the blockchain network based on a reputation metric associated with each of the nodes in the blockchain network. The reputation metric may be an indication of an accuracy factor or trust factor of each node in the blockchain network. The reputation metric may indicate the level of accuracy associated with the node in validating a given transaction. In an embodiment, the reputation metric of a node may be based on the accuracy with which the node validates/executes a given transaction. Therefore, for every correct execution or validation, the reputation metric associated with the node may increase. Similarly, if the validation or execution of the transaction is performed incorrectly, the reputation metric of the node may decrease. Advantageously, nodes with high reputation metric are selected for replication of designated vote to a given transaction. Therefore, accuracy of the validation process is maintained. Additionally, reputation metric provides a mechanism to evaluate the performance of validator nodes.

According to an embodiment, the method further includes computing a validation decision for validating the instance of the transaction using available resource parameters at the first node. Such computation may be performed if the resource parameters satisfy the threshold resource parameter requirement. The threshold resource parameter requirement may be, for example, computational capacity associated with the first node, to execute the transaction. The method further includes validating the instance of the transaction using the computed validation decision. If the validation decision is successful, the first node may validate the transaction. If the validation decision is unsuccessful, the first node may reject the transaction. Advantageously, the first node may participate in the validation process once the resource parameters associated with the first node meet the threshold resource parameter requirements. Therefore, the accuracy of the validation decision associated with the at least one second node may be verified using the validation decision of the first node.

According an embodiment, the resource parameters associated with the nodes may include resources available for validating the transaction. In an embodiment, the resource parameters include parameters associated with one or more resources such as time required for validating the decision from a time of receiving a request to validate the transaction, network availability associated with the node when the request to validate the transaction is received, processing capacity associated with node when the request to validate the transaction is received, etc.

According to an embodiment, the reputation metric associated with the at least one second node is an indicator of accuracy of the at least one second node in validating a given transaction. The accuracy of the validation may be based on the accuracy of validation of historical transactions. Therefore, if the accuracy associated with a node for validation of transactions is high, the reputation metric associated with such node is high. However, if the accuracy for validation of transactions is low, the reputation metric associated with such node is low. Therefore, in order to maintain a high reputation metric, the accuracy of validation of transactions by the node must be high. Advantageously, the reputation metric associated with a node enables establishment of a trust factor of the node. The trust factor may be a representative of accuracy with which the node may have validated one or more transactions historically. Therefore, higher the reputation metric associated with the node, higher the accuracy with which the node may validate a transaction.

According to a further embodiment, the method includes requesting at least one second node by the first node, for information associated with execution of the transaction. In a blockchain network, one or more nodes may execute a given transaction and/or contract included in each block, check validity associated with such transaction and assign a vote on the block. In an embodiment, the second node may have validated the transaction and may have assigned a vote to the block. Therefore, the information associated with the execution of the transaction may be, for example, the vote assigned to the block by the second node. The method further includes receiving the information associated with the execution of the transaction by the first node, from the at least one second node. The information associated with the at least one second node may be sent to the first node, wherein the information is digitally signed using a private key. The vote assigned by the at least one second node may be received from the at least one second node. The information may be stored by the first node. In an embodiment, the information may be stored by the first node until the resource parameters associated with the first node satisfy the threshold resource parameter requirement. Advantageously, the vote designated by the at least one second node to the transaction may be relied upon by the first node in case the resource parameters associated with the first node are below the threshold resource parameters. Therefore, the time taken by the first node to process the transaction may be reduced. Thus, the overall performance of the blockchain network is enhanced.

According to another embodiment, the method may include comparing the obtained validation decision for the first node with the validation decision associated with the at least one second node. In an embodiment, the validation decision associated with the first node may or may not match with the validation decision associated with the at least one second node. Therefore, based on the comparison, the reputation metric associated with the at least one second node may be modified. For example, if the validation decision associated with the first node matches with the validation decision associated with the at least one second node, the reputation metric associated with the at least one second node may be increased. Similarly, if the validation decision associated with the first node does not match with the validation decision associated with the at least one second node, the reputation metric associated with the at least one second node may be decreased. The increase in the reputation metric may indicate an increase in the trust factor associated with the at least one second node. Advantageously, the reputation metric may be dynamically updated based on the accuracy of validation of the transaction by the at least one second node.

According to a further embodiment, the reputation metric associated with the at least one second node is linearly increased if the validation decision associated with the first node matches the validation decision associated with the at least one second node. Alternatively, the reputation metric may be modified by exponentially decreasing the reputation metric associated with the second node if the validation decision associated with the first node does not match with the validation decision associated with the at least one second node. An incentive or a penalty mechanism may enable one or more validating nodes in the blockchain network to maintain reputation metric levels associated with such one or more validating nodes to an expected threshold. The validating nodes may be incentivized for validating transactions or blocks using, for example, transaction fees. If the validator nodes transmit incorrect validation information, the validator node may be malicious, compromised or may have incorrect state data. Therefore, with multiple instances of incorrect validation results, the reputation metric associated with such validator nodes may decrease significantly. Advantageously, the reputation metric may be dynamically updated based on the accuracy of validation of the transaction by the at least one second node.

According to still another embodiment, in processing the instance of the transaction by applying the validation decision associated with the at least one second node, the method includes identifying the designated vote associated with the at least one second node. The method further includes designating a vote by the first node indicating a validation decision for the transaction based on the validation decision associated with the at least one second node. The designated vote associated with the at least one second node indicates the validation decision associated with the at least one second node for the transaction. Therefore, the first node may designate a vote for the validity of the transaction even when the resource parameters associated with the first node are below the threshold resource parameter level. Thus, advantageously, the time taken to validate the transaction in the blockchain network is reduced, thereby improving the efficiency or performance of the blockchain network.

Advantageously, the invention enables maintenance of performance of the blockchain network even if one or more nodes are resource constrained. Therefore, lightweight nodes may also be capable of participating in the process of validating one or more transactions in the blockchain network. Furthermore, the invention provides a mechanism to evaluate the performance of the nodes in validating transactions.

The invention relates in one aspect to a device for processing a transaction in a blockchain network. The device includes one or more processing units, a database, and a memory communicatively coupled to the one or more processing units. The memory includes a validating module that may be configured to perform the method steps of validating a transaction in a blockchain network, as described above.

According to an embodiment, the validation module is configured to receive by a first node in a plurality of nodes of the blockchain network, a request to validate an instance of the transaction. The blockchain network may include a plurality of nodes essential for functioning of the blockchain network. The nodes may be devices on the blockchain network that are capable of performing one or more assigned tasks. A node can be, for example, a computing device including a processing unit. The node may be configured to store copies of a blockchain transaction and/or to execute a transaction. A transaction may be a record of an event that may require execution. Transactions may include, for example, financial transactions, recordation of an agreement between parties, information associated with identity of a person, information associated with ownership of a property, etc. The nodes in the blockchain network have to validate the transaction for the transaction to be included in the blockchain. Therefore, the accuracy of the transaction is ensured before such transaction is maintained in the blockchain network. Such an instance to validate the transaction may be received by the first node of the plurality of nodes in the blockchain network.

The validation module may be further configured to determine whether resource parameters of the first node satisfy threshold resource parameter requirement for validating the transaction. In an embodiment, the resource parameters include, for example, time required for validating the decision from a time of receiving the request to validate the transaction, network availability associated with the node when the request to validate the transaction is received, processing capacity associated with node when the request to validate the transaction is received, etc. Availability of resource parameters associated with the node is essential so as to ensure effective processing of the transaction by the node. Therefore, the process of validation may be completed faster. The threshold resource parameter requirement may be the minimum resource parameter requirement that may be required in order to execute the transaction for validation. In an embodiment, the threshold resource requirement may be adapted according to the nature of the transaction to be validated. The validation module may be further configured to determine a validation decision associated with a second node of the plurality of nodes of the blockchain network, if the resource parameters of the first node fail to satisfy the threshold resource parameter requirement. The blockchain network may include at least one second node of the plurality of nodes that may have validated the transaction. On validation of such transaction, a validation decision may be generated. Such validation decision may indicate, for example, whether a block may be added to the blockchain or may be rejected. In an embodiment, the second node of the plurality of nodes may have the resource parameters required to execute the transaction and generate the associated validation decision. Therefore, the validation decision associated with such second node is determined if the first node may not have resource parameters to execute the transaction. The validation module may be further configured to process the instance of the transaction by applying the validation decision associated with the second node. In an embodiment, processing the instance of the transaction may include applying the validation decision associated with the second node as the validation decision of the first node. In another embodiment, processing the instance of the transaction includes replicating a designated vote associated with the second node as the designated vote associated with the first node. The designated vote may be in reference to the validation of the transaction. Advantageously, the process of validating the transaction is faster. Therefore, resource parameter constraints associated with the first node are eliminated.

According to an embodiment, the second node is selected from the plurality of nodes in the blockchain network based on a reputation metric associated with each of the nodes in the blockchain network. The reputation metric may be an indication of an accuracy factor of each node in the blockchain network. The reputation metric may indicate the level of accuracy associated with the node in validating a given transaction. In an embodiment, the reputation metric of a node may be based on the accuracy with which the node validates/executes a given transaction. Therefore, for every correct execution or validation, the reputation metric associated with the node may increase. Similarly, if the validation or execution of the transaction is performed incorrectly, the reputation metric of the node may decrease.

According to an embodiment, the validation module may be further configured to compute a validation decision for validating the instance of the transaction using available resource parameters at the first node. Such computation may be performed only if the resource parameters satisfy the threshold resource parameter requirement. The threshold resource parameter requirement may be, for example, computational capacity associated with the first node, to execute the transaction. The validation module may be further configured to validate the instance of the transaction using the computed validation decision. If the validation decision is positive, the first node may validate the transaction. If the validation decision is negative, the first node may reject the transaction.

According to an embodiment, the resource parameters associated with the nodes include, for example, resources available for validating the transaction. In an embodiment, the resource parameters include, for example, time required for validating the decision from a time of receiving a request to validate the transaction, network availability associated with the node when the request to validate the transaction is received, processing capacity associated with node when the request to validate the transaction is received, etc. Availability of resource parameters associated with the node is essential so as to ensure effective processing of the transaction by the node. Therefore, the process of validation may be completed faster.

According to an embodiment, the reputation metric associated with the at least one second node is an indicator of accuracy of the at least one second node in validating a given transaction. The accuracy of the validation may be based on the accuracy of validation of historical transactions. Therefore, if the accuracy associated with a node for validation of transactions is high, the reputation metric associated with such node is also high. However, if the accuracy for validation of transactions is low, the reputation metric associated with such node is also low. Therefore, in order to maintain a high reputation metric, the accuracy of validation of transactions by the node must be high. Advantageously, the reputation metric associated with a node enables establishment of a trust factor of the node. The trust factor may be a representative of accuracy with which the node may have validated one or more transactions historically. Therefore, higher the reputation metric associated with the node, higher the accuracy with which the node may validate a transaction.

According to a further embodiment, the validation module may be configured to request at least one second node by the first node, for information associated with execution of the transaction. In a blockchain network, one or more nodes may execute a given transaction and/or contract included in each block, check validity associated with such transaction and assign a vote on the block. In an embodiment, the second node may have validated the transaction and may have assigned a vote to the block. Therefore, the information associated with the execution of the transaction may be, for example, the vote assigned to the block by the second node. The validation module may be further configured to receive the information associated with the execution of the transaction from the at least one second node, by the first node. Such information associated with the at least one second node may be sent to the first node, wherein the information is digitally signed using a private key. The vote assigned by the at least one second node may be received from the at least one second node. Such information may be stored by the first node. In an embodiment, such information may be stored by the first node until the resource parameters associated with the first node satisfy the threshold resource parameter requirement. Advantageously, the vote designated by the at least one second node to the transaction may be relied upon by the first node in case the resource parameters associated with the first node are below the threshold resource parameters. Therefore, the time taken by the first node to process the transaction may be reduced. Thus, the overall performance of the blockchain network is enhanced.

According to another embodiment, the validation module may be further configured to compare the obtained validation decision for the first node with the validation decision associated with the at least one second node. In an embodiment, the validation decision associated with the first node may or may not match with the validation decision associated with the at least one second node. Therefore, based on the comparison, the reputation metric associated with the at least one second node may be modified. For example, if the validation decision associated with the first node matches with the validation decision associated with the at least one second node, the reputation metric associated with the at least one second node may be increased. Similarly, if the validation decision associated with the first node does not match with the validation decision associated with the at least one second node, the reputation metric associated with the at least one second node may be decreased. In an embodiment, a consensus may be obtained from the one or more nodes in the blockchain network to update the reputation metric associated with the at least one second node. The increase in the reputation metric may indicate an increase in the trust factor associated with the at least one second node. Advantageously, the reputation metric may be dynamically managed based on the accuracy of validation of the transaction by the at least one second node.

According to a further embodiment, the reputation metric associated with the at least one second node is linearly increased if the validation decision associated with the first node matches the validation decision associated with the at least one second node. Modification of the reputation metric may also include exponentially decreasing the reputation metric associated with the second node if the validation decision associated with the first node does not match with the validation decision associated with the at least one second node. An incentive or a penalty mechanism may enable one or more validating nodes in the blockchain network to maintain reputation levels associated with such one or more validating nodes. The validating nodes may be incentivized for validating transactions or blocks using, for example, transaction fees. If the validator nodes transmit incorrect validation information, the validator node may be malicious, compromised or may have incorrect state data. Therefore, with multiple instances of incorrect validation results, the reputation metric associated with such validator nodes may decrease drastically. Such validator nodes may thus be voted out of the blockchain network. Advantageously, the reputation metric may be dynamically managed based on the accuracy of validation of the transaction by the at least one second node.

According to an embodiment, in processing the instance of the transaction by applying the validation decision associated with the at least one second node, the validation module may be further configured to identify the designated vote associated with the at least one second node. The validation module may be further configured to designate a vote by the first node indicating a validation decision for the transaction based on the validation decision associated with the at least one second node. The designated vote associated with the at least one second vote indicates the validation decision associated with the at least one second node for the transaction. Therefore, the first node may designate a vote for the transaction even if the resource parameters associated with the first node are below the threshold resource parameter level. Thus, advantageously, the time taken to validate the transaction in the blockchain network is reduced, thereby improving the performance of the blockchain network.

The invention also relates to a distributed ledger system including a network. The distributed ledger system further includes one or more nodes communicatively coupled to the network. The one or more nodes include computer readable instructions, which when executed by the one or more nodes cause the one or more nodes to perform the method described above.

The invention relates in one aspect to a computer program product comprising a computer program, the computer program being loadable into a storage unit of a system, including program code sections to make the system execute the method according to an aspect of the invention when the computer program is executed in the system.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing systems can be easily adopted by software updates in order to process a transaction in a blockchain network, according to the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:

FIG 1    is a schematic representation of a distributed ledger system, according to an embodiment of the present invention.

FIG 2    is a block diagram of a node or device for processing a transaction in a blockchain network, according to the embodiment of the present invention.

FIG 3    illustrates a flowchart of a method of processing a transaction in a blockchain network, according to an embodiment of the present invention.

FIG 4    illustrates a flowchart of a method of processing the instance of the transaction by the first node based on the validation decision associated with the second node, according to an embodiment of the present invention.

FIG 5    illustrates a flowchart of a method of modifying the reputation metric associated with the plurality of nodes, according to an embodiment of the present invention.

FIG 6    illustrates a table indicating reputation metrics associated with a plurality of nodes, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

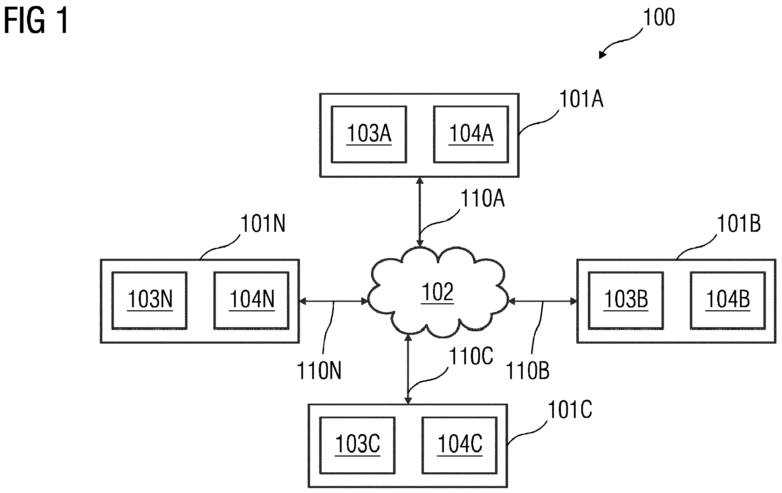

FIG 1 is a schematic representation of a distributed ledger system 100, according to an embodiment of the present invention. The terms 'distributed ledger system' and 'blockchain network' are interchangeably used throughout the document. The terms 'node' and 'device' are interchangeably used throughout the document. The distributed ledger system 100 includes a plurality of nodes 101A-N and a network 102 to which the plurality of nodes 101A-N are connected. In an embodiment, the plurality of nodes 101A-N include at least one or more validator nodes and non-validator nodes. The nodes 101A-N may include one or more computing devices capable of executing one or more transactions in the blockchain network 100. If a transaction is successfully executed by one or more nodes 101A-N, a block is added to the blockchain network 100. The one or more nodes 101A-N may be geographically distributed. Each of the nodes 101A-N is capable of communicating with each other using respective communication interfaces 104A-N using communication links 110A-N via the Internet or the network 102. The communication links 110A to 110N can be wired or wireless links. The one or more nodes 101A-N may have an operating system and at least one software program 103A-N for performing desired operations in the distributed ledger system 100.

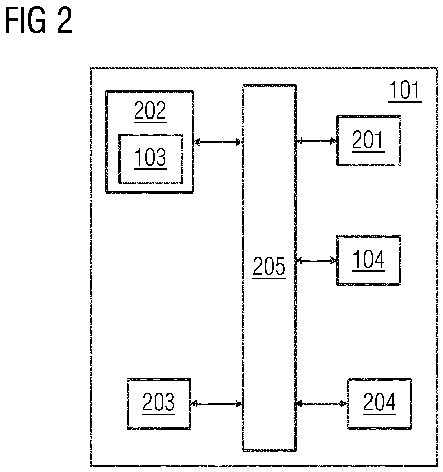

The one or more nodes 101A-N are further illustrated in greater detail in FIG 2. Referring to FIG 2, the node 101 includes one or more processing units 201, a memory 202, a storage unit 203, a network interface 104, a standard interface or bus 205 The node 101 may be an exemplary embodiment of a computing device. The node 101 can be a (personal) computer, a workstation, a virtual machine running on host hardware, a microcontroller, or an integrated circuit. As an alternative, the node 101 can be a cluster of computers or a cloud computing device.

The one or more processing units 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 201 may also include embedded controllers, such as generic or programmable logic devices or arrays, application specific integrated circuits, single-chip computers, and the like. In general, a processing unit 201 can comprise hardware elements and software elements. The processing unit 201 can be configured for multithreading, i.e. the processing unit 201 can host different calculation processes at the same time, executing the processes either in parallel or switching between active and passive calculation processes.

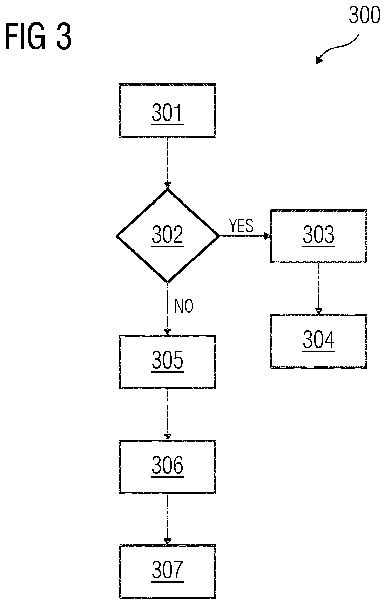

The memory 202 may be volatile memory and non-volatile memory. The memory 202 may be coupled for communication with the processing unit 201. The processing unit 201 may execute instructions and/or code stored in the memory 202. A variety of computer-readable storage media may be stored in and accessed from the memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes a validation module 103 stored in the form of machine-readable instructions on any of the above-mentioned storage media and may be in communication with and executed by processing unit 201. When executed by the processing unit 201, the validation module 103 causes the processing unit 201 to process at least one transaction in the distributed ledger system 100. Method steps executed by the processing unit 201 to achieve the abovementioned functionality are elaborated upon in detail in FIGs 3, 4, and 5.

The storage unit 203 may be a non-transitory storage medium which stores a transaction database. The transaction database may store an event history of the one or more nodes 101A-N in the distributed ledger system 100, reputation metrics associated with the plurality of nodes 101A-N and resource parameters associated with the plurality of nodes 101A-N. The bus 205 acts as interconnect between the processing unit 201, the memory 202, the storage unit 203, and the network interface 104. The device 101 may also include an input unit 204 which may include input means such as keypad, touch-sensitive display, camera (such as a camera receiving gesture-based inputs), etc.

Those of ordinary skill in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

Disclosed embodiments provide systems and methods for processing at least one transaction in a blockchain network. In particular, the systems and methods may execute and validate a transaction in a distributed ledger system.

FIG 3 illustrates a flowchart of a method 300 of processing at least one transaction in a distributed ledger system 100 or a blockchain network 100, according to an embodiment of the present invention. The distributed ledger system 100 may be a decentralized ledger capable of processing a plurality of transactions and add one or more blocks to the ledger such that one or more associated data with the transactions cannot be tampered with. A transaction may be a record of an event that may require execution. Transactions may include, for example, financial transactions, recordation of an agreement between parties, information associated with identity of a person, information associated with ownership of a property, etc. The distributed ledger system 100 may include one or more nodes 101A-N which may be involved in executing the plurality of transactions. The nodes 101A-N may be devices that include one or more processing units that may have computing capability to process the plurality of transactions in the distributed ledger system 100. In order that a transaction be successfully processed in the blockchain network 100, the one or more nodes 101A-N may have to execute and validate the transaction. The time duration taken to execute and validate a given transaction may depend on the computing abilities and availability of the one or more nodes 101A-N. At step 301, a request to validate an instance of the transaction is received by a first node 101A in the plurality of nodes 101A-N of the blockchain network 100. The request to validate the instance of the transaction may be received from one or more other nodes in the plurality of nodes 101A-N. At step 302, a determination is made if resource parameters associated with the first node 101A satisfy threshold resource parameter requirement for validating the transaction. The nodes 101A-N may have one or more associated resource parameters based on which the transaction may be executed and validated. In an embodiment, the resources parameters associated with the nodes 101A-N may include time required to validate the transaction, processing capacity associated with the nodes 101A-N, network availability associated with the nodes 101A-N when the request to validate the transaction is received, etc. The threshold resource parameter requirement may be optimum resource parameter values required for a node 104-N to execute and validate the transaction. In an embodiment, the threshold resource parameter requirement may be defined based on the nature of the transaction, for example, a complexity factor associated with the transaction. If the resource parameters associated with the first node 101A meet the threshold resource parameter requirement, at step 303, the transaction is executed and validated at step 304. If the threshold resource parameter requirement is not met, at step 305 a second node 101B of the plurality of nodes 101A-N is selected. For example, the second node 101B may be a node which has previously validated the transaction. At step 306, a validation decision associated with the second node 101B is determined. Based on the outcome of the execution of the transaction, the second node 101B may have an associated validation decision to the transaction.

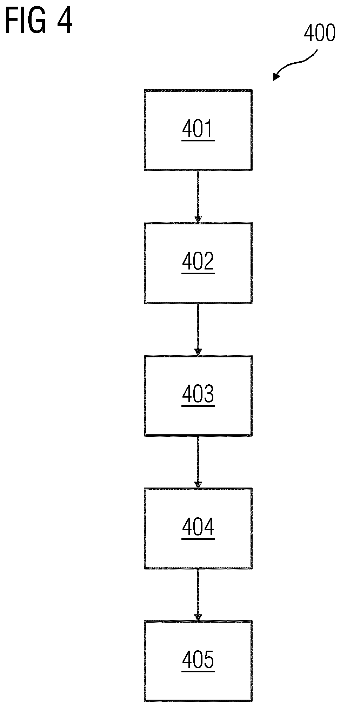

The validation decision may be to add a block of the transaction to the blockchain network 100 or to reject the block from being added to the blockchain network. In an embodiment, the plurality of nodes 101A-N may designate a vote to the block based on an outcome of the execution of the transaction. The designated votes from each of the plurality of nodes 101A-N may determine if the block is to be added in the blockchain network 100 or if the block is to be rejected from being added to the blockchain network 100. At step 307, the instance of the transaction is processed by the first node 101A based on the validation decision associated with the second node 101B. The first node 101A may consider the designated vote of the second node 101B in association with the transaction to proceed with the processing of the transaction. Advantageously, the performance of the blockchain network is improved as processing of transactions on the blockchain network is made faster. Furthermore, processing of transactions may not entirely depend on a consensus of all the nodes 101A-N that form a part of the blockchain network 100. Therefore, if the transaction is executed and validated by at least one of the plurality of nodes 101A-N, the validation of the transaction in entirety can be performed on the blockchain network 100. The method steps of processing the instance of the transaction by the first node 101A is explained in greater detail in FIG 4.

FIG 4 illustrates a flowchart of a method 400 of processing the instance of the transaction by the first node 101A based on the validation decision associated with the second node 101B, according to an embodiment. At step 401, the at least one second node 101B is requested for information associated with the execution of the transaction. The request for such information from the at least one second node 101B is sent from the first node 101A. In an embodiment, the information associated with the validation of the transaction may include a vote designated to the validation of the transaction by the at least one second node 101B. At step 402, the information associated with the execution of the transaction is sent to the first node 101A by the at least one second node 101B. The information may be digitally signed by the at least one second node 101B using a private key associated with the at least one second node 101B. The information may be accessed by the first node 101A using a public key associated with the first node 101A. The information digitally signed using a private key may be accessed using a corresponding public key which may be accessible to the plurality of nodes 101A-N in the blockchain network 100. At step 403, the vote designated by the at least one second node 101B for validation of the transaction is identified. The designated vote may be to accept commitment of the block to the blockchain network 100 or to reject the transaction. In an embodiment, successful execution of the transaction may result in adding the block associated with the transaction to the blockchain network 100. Therefore, the designated vote indicates the validation decision of the at least one second node 101B for the transaction. If during the execution, the transaction is identified to be malicious or compromised, the block associated with the transaction is not added to the blockchain network 100. Once the designated vote associated with the at least one second node is identified, at step 404, a vote is designated by the first node 101A to the transaction based on the validation decision of the at least one second node 101B. Therefore, the designated vote of the at least one second node 101B is replicated by the first node 101A for the transaction. Advantageously, replicating the vote associated with the at least one second node 101B enables the first node 101A to participate in the validation process of the transaction even when the resource parameters associated with the first node 101A are below threshold resource parameter requirement. Therefore, the performance of the blockchain network is enhanced.

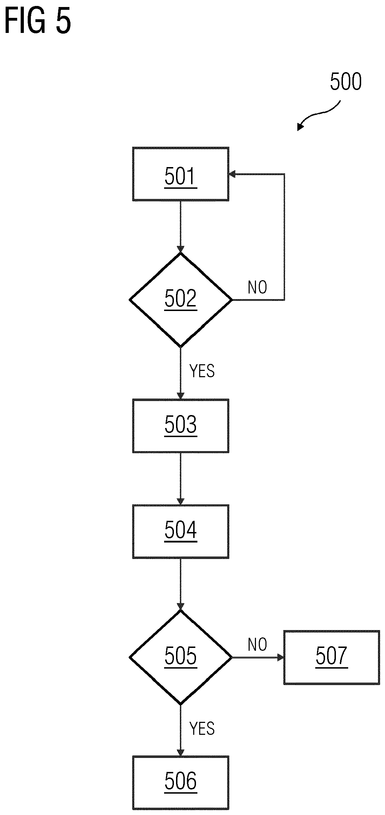

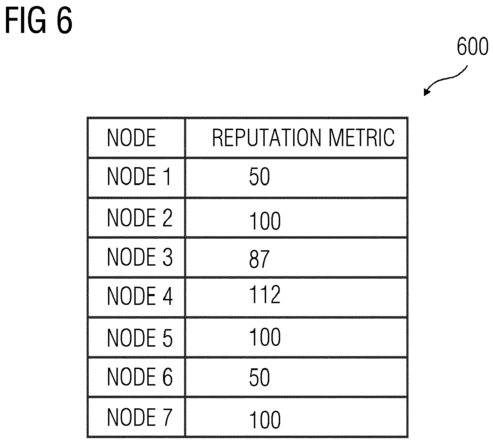

In an embodiment, the at least one second node 101B is selected based on a reputation metric associated with the at least one second node 101B. Every node in the blockchain network that forms a part of validating a transaction may be assigned a reputation metric. The reputation metric is an indicator of how effectively the node 101A-N may have validated one or more transactions historically. The reputation metric associated with the nodes 101A-N may be increased or decreased based on the effectiveness of the execution and validation of transactions by the nodes 101A-N. FIG 6 illustrates a table 600 indicating reputation metrics associated with a plurality of nodes, according to an embodiment. The method steps for modifying the reputation metric associated with the plurality of nodes 101A-N are elaborated in greater detail in FIG 5.

FIG 5 illustrates a process flowchart 500 of a method of modifying the reputation metric associated with the plurality of nodes 101A-N, according to an embodiment of the present invention. At step 501, the resource parameters associated with the first node 101A is updated. The resource parameters may be updated based on a real-time resource availability of the first node 101A, for example, with regard to availability of computational space, or availability of time for execution and validation of the transaction. At step 502, a determination is made if the resource parameters associated with the first node 101A is equal to or greater than the threshold resource parameter requirement. If the resource parameters associated with the first node 101A is equal to or greater than the threshold resource parameter requirement, at step 503, a validation decision is computed by the first node 101A for the transaction. The validation decision may be computed by executing the transaction and determining if the transaction is valid and can be added to the block in the blockchain network 100. At step 504, the validation decision associated with the at least one second node 101B is obtained. A comparison between the validation decision of the first node 101A and the validation decision of the at least one second node 101B is made at step 505. At step 505, a determination is made if there is a match between the two validation decisions associated with the first node and the at least one second node. If the decisions match, at step 506, the reputation metric associated with the at least one second node 101B is linearly increased. The reputation metric associated with a given node increases based on accurate execution of transactions and decreases based on malicious activity. Mirroring the real world, the reputation metric associated with a given node may be decreased or lost easily if the performance of the node is inaccurate or malicious. Therefore, if the validation decision of the first node 101A may not match with the validation decision of the at least one second node 101B, at step 507 the reputation metric associated with the at least one second node 101B is exponentially decreased. A penalty mechanism may be required to motivate the validating nodes 101A-N to maintain the reputation metrics. The nodes 101A-N are incentivized for accurately validating transactions, for example, using transaction fees. Therefore, the nodes 101A-N are expected to perform effectively. However, if a node transmits incorrect validation results, or fails to execute the transactions accurately, the node may be malicious or compromised or may have incorrect system state data. Therefore, with multiple instances of incorrect validation decisions, the reputation metric associated with the node may drastically decrease.

The reputation metric $r \in [0,1]$ is an indicator of trust in the blockchain network 100. In an embodiment, in order that the reputation metric associated with a node may exponentially decrease, the reputation metric associated with the node should decrease in ratio to the value of the reputation metric. Therefore, higher the value, the larger the decrease in the reputation metric associated with the node. The behavior may be modeled using an exponential decrease function. For example, the reputation metric reduction function may be depicted as:

$$\mathrm{d}(r) = \mathrm{a}\, r^{1+r}$$

where 0 < a < 1
where 'a' is a constant which regulates rate of decrease of reputation.

In another embodiment, reputation metric associated with a node may linearly increase in small values such that the node may need to continuously validate transactions accurately in order to build the reputation metric. For example, the reputation metric increase function may be depicted as:

$$I(r) = \max\{(r + c), 1\}$$

Where 0 < c << 1
Where 'c' is a very small positive constant which may define the increase in reputation metric.

Advantageously, the invention enables maintenance of performance of the blockchain network 100 even if one or more nodes 101A-N are resource constrained. Therefore, lightweight nodes may also be capable of participating in the process of validating one or more transactions in the blockchain network. Furthermore, the invention provides a mechanism to evaluate the performance of the nodes 101A-N in validating transactions.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

List of reference numbers

[0051]

100 Distributed ledger system/Blockchain network
101A-N Node, Device
102 Network
103A-N Validation module
104A-N Communication interface
110A-N Communication links
201 Processing unit
202 Memory
203 Storage unit
204 Input unit
205 Bus
300 Flowchart of method of processing a transaction in a blockchain network
400 Flowchart of method of processing the instance of the transaction by the first node based on the validation decision associated with the second node
500 Flowchart of method of modifying the reputation metric associated with the plurality of nodes
600 Table comprising one or more reputation metrics associated with plurality of nodes in a blockchain network

**Claims**

1. A method of processing a transaction in a distributed ledger system (100), the method comprising:

receiving, by a first node (101A) in a plurality of nodes (101A-N) of a distributed ledger system (100), a request to validate an instance of the transaction, wherein the transaction may be a record of an event that requires execution; determining whether resource parameters of the first node (101A) meet threshold resource parameter requirement for validating the transaction; if the resource parameters of the first node (101A) do not meet the threshold resource parameter requirement, selecting at least one second node (101B) that has validated the transaction; determining a validation decision associated with the at least one second node (101B) of the plurality of nodes (101A-N) of the distributed ledger system (100); and processing the instance of the transaction by the first node (101A) based on the validation decision associated with the at least one second node (101B).

2. The method (300) according to claim 1, wherein selecting the at least one second node (101B) from the plurality of nodes (101A-N) of the distributed ledger system (100) comprises selecting the at least one second node (101B) based on a reputation metric corresponding to each of the nodes (101A-N) of the distributed ledger system (100).

3. The method (300) according to claim 1, further comprising:

computing a validation decision for validating the instance of the transaction using available resources at the first node (101A) if the resource parameters of the first node (101A) satisfy the threshold resource parameter requirement; and validating the instance of transaction for the first node (101A) using the computed validation decision.

4. The method (300) according to claim 2, wherein the reputation metric associated with the at least one second node (101B) is an indicator of trust factor of the at least one second node (101B) in validating a given transaction, wherein the trust factor is determined based on an accuracy of validation of historical transactions.

5. The method (300) according to claim 1, further comprising:

requesting the at least one second node (101B) for information associated with execution of the transaction, wherein the information associated with execution of the transaction comprises a designated vote associated with the at least one second node (101B), wherein the designated vote indicates the validation decision associated with the at least one second node (101B) for the transaction; receiving by the first node (101A) the information associated with execution of the transaction from the at least one second node (101B); and storing by the first node (101A) the information associated with execution of the transaction by the at least one second node (101B).

6. The method (300) according to claim 3, further comprising:

comparing the obtained validation decision for the first node (101A) with the validation decision associated with the at least one second node (101B); and modifying the reputation metric associated with the at least one second node (101B) based on the validation decision of the first node (101A).

7. The method (300) according to claim 6, wherein modifying the reputation metric associated with the at least one second node (101B) comprises:

linearly increasing the reputation metric associated with the at least one second node (101B) if validation decision associated with the first node (101A) matches the validation decision associated with the at least one second node (101B); and exponentially decreasing the reputation metric associated with the at least one second node (101B) if validation decision associated with the first node (101A) does not match the validation decision associated with the at least one second node (101B).

8. The method (300) according to claim 1 and 5, wherein processing the instance of the transaction by applying the validation decision associated with the at least one second node (101B) comprises:

identifying the designated vote associated with the at least one second node (101B), wherein the designated vote indicates the validation decision associated with the at least one second node (101B) for the transaction; and designating a vote by the first node (101A) indicating a validation decision for the transaction based on the validation decision associated with the at least one second node (101B).

9. A device (101) for processing a transaction in a distributed ledger system (100), the device (101) comprising:

one or more processing units (201); and
a memory (202) communicatively coupled to the one or more processing units (201), wherein the memory (202) comprises a validation module (103) configured to perform the method steps as claimed in claims 1 to 8.

10. A distributed ledger system (100) comprising:

a network (102);
one or more nodes (101A-N) communicatively coupled to the network (102), wherein the one or more nodes (101AN) comprise computer readable instructions, which when executed by the one or more nodes (101A-N) cause the one or more nodes (101A-N) to perform method steps according to claims 1 to 8.

11. A computer program product comprising machine readable instructions, that when executed by one or more processing units (201), cause the one or more processing units (201) to perform method steps according to claims 1-8.

12. A computer readable medium on which program code sections of a computer program are saved, the program code sections being loadable into and/or executable in a system to make the system execute the method steps according to any one of the claims 1 to 8 when the program code sections are executed in the system.

FIG 1

100

101A

103A    104A

110A

101N

103N    104N

102

110N    110C    110B

101B

103B    104B

101C

103C    104C

EP 3 866 010 A1

FIG 2

FIG 3

300

```
        ┌─────────┐
        │   301   │
        └─────────┘
             │
             ▼
          ◇ 302 ◇ ──YES──► ┌─────────┐
             │              │   303   │
            NO              └─────────┘
             │                   │
             ▼                   ▼
        ┌─────────┐         ┌─────────┐
        │   305   │         │   304   │
        └─────────┘         └─────────┘
             │
             ▼
        ┌─────────┐
        │   306   │
        └─────────┘
             │
             ▼
        ┌─────────┐
        │   307   │
        └─────────┘
```

FIG 4

400

401

402

403

404

405

# FIG 5

500

```
          ┌─────────┐
          │   501   │◄──────────┐
          └─────────┘           │
               │                │
               ▼                │
            ◇───────◇           │
           ◇  502   ◇──── NO ───┘
            ◇───────◇
               │
              YES
               ▼
          ┌─────────┐
          │   503   │
          └─────────┘
               │
               ▼
          ┌─────────┐
          │   504   │
          └─────────┘
               │
               ▼
            ◇───────◇                  ┌─────────┐
           ◇  505   ◇──── NO ─────────►│   507   │
            ◇───────◇                  └─────────┘
               │
              YES
               ▼
          ┌─────────┐
          │   506   │
          └─────────┘
```

# FIG 6

600

| NODE | REPUTATION METRIC |
|------|-------------------|
| NODE 1 | 50 |
| NODE 2 | 100 |
| NODE 3 | 87 |
| NODE 4 | 112 |
| NODE 5 | 100 |
| NODE 6 | 50 |
| NODE 7 | 100 |

Europäisches Patentamt
European Patent Office
Office européen des brevets

# EUROPEAN SEARCH REPORT

Application Number

EP 20 15 6949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTHAUS WANDER ET AL: "Towards peer-to-peer-based cryptanalysis", LOCAL COMPUTER NETWORKS (LCN), 2010 IEEE 35TH CONFERENCE ON, IEEE, 10 October 2010 (2010-10-10), pages 1005-1012, XP031986726, DOI: 10.1109/LCN.2010.5735672 ISBN: 978-1-4244-8387-7 * the whole document * | 1-12 | INV. G06F9/50 G06Q20/40 |
| X | AL-KHAFAJIY MOHAMMED ET AL: "COMITMENT: A Fog Computing Trust Management Approach", JOURNAL OF PARALLEL AND DISTRIBUTED COMPUTING, ELSEVIER, AMSTERDAM, NL, vol. 137, 8 November 2019 (2019-11-08), pages 1-16, XP085994930, ISSN: 0743-7315, DOI: 10.1016/J.JPDC.2019.10.006 [retrieved on 2019-11-08] * the whole document * | 1-12 | |

TECHNICAL FIELDS SEARCHED (IPC)

G06F
G07G
G06Q

The present search report has been drawn up for all claims

| Place of search | Date of completion of the search | Examiner |
|---|---|---|
| The Hague | 17 July 2020 | Touloupis, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)